# EUROPEAN PATENT SPECIFICATION

(11) **EP 2 084 952 B1**
(45) Date of publication and mention of the grant of the patent: **28.07.2010**
(21) Application number: 08101214.8
(22) Date of filing: 01.02.2008
(51) Int. Cl.: A01D 34/416, A01D 34/535

(54) **Cutting element**
Schneideelement
Élément de coupe

(43) Date of publication of application: 05.08.2009
(73) Proprietor: Guerra, Lauro, 42015 Correggio (RE) (IT)
(72) Inventor: Guerra, Lauro, 42015 Correggio (RE) (IT)
(74) Representative: Pesce, Michele

(56) References cited:
- EP-A- 1 749 429
- CA-A1- 2 300 662
- GB-A- 2 272 624
- US-A- 5 430 943
- US-B1- 6 722 114

## Description

The present invention relates to a cutting element of the corded head type.

Garden trimmers are known devices for cutting grass, weeds and similar vegetation. They comprise a rotating head from which the two or more ends of a cord of suitable plastic material radially project symmetrically.

The head is rotatably supported at the end of a support and gripping structure, usually in the form of a bar, to the other end of which an internal combustion engine or electric motor is fixed.

The support structure encloses a device for transmitting rotary motion from the motor or engine shaft to the head and also comprises gripping means which enable the user to correctly grip the trimmer for its use.

US 6 119 350 discloses a cutter element having a body from which an arm extends.

The arm has a constant cross-section which causes a noisy working and high probability of breakage.

US 6 161 292 discloses a cutting element having a compressed shape along the axis of rotation. This cutting element breaks at the border connected to the cutting head.

US 6 722 114 discloses a cutting element according to the pre-characterising portion of claim 1.

The aim of the present invention is therefore to provide a cutting element for a trimmer by which the said problems of the known art are eliminated.

Within the scope of this aim, specific objects are to provide a cutting structure which:
- prevents the cord breaking at the cord exit aperture in the head or considerably reduces the frequency of this phenomenon;
- enables the cord to be easily and quickly replaced without excessive force;
- limits noise;
- provides a higher cutting quality.

The technical aim, together with these and further objects, are attained according to the invention by providing a cutting element in accordance with the accompanying claims.

A further aim of the present invention is to provide a cutting element which has a noiseless working and which is very strong, such that it has a very low probability of breakage.

Further characteristics and advantages will be more apparent from the description of a preferred but non-exclusive embodiment of the cutting element according to the invention, illustrated by way of non-limiting example in the accompanying figures, in which:
Figure 1 is a coaxial section through a garden trimmer head provided with a cutting element of the invention;
Figure 2 shows a top view of a garden trimmer head provided with a cutting element of the invention;
Figures 3 - 7 show a first embodiment of the cutting element according to the invention;
Figures 8 - 12 show a further embodiment of the cutting element according to the invention;
Figures 13 - 14 show one more embodiment of the cutting element according to the invention; and
Figures 15 - 16 show an embodiment similar to that of figures 13-14, but having two arms.

With reference to said figures, these show a cutting element for a garden trimmer.

The garden trimmer head has the features already described in EP 1749429 which is incorporated for reference, and thus it has a first casing 2 to which a second casing 3 is fixed by screws 4.

The first casing 2 presents recessed seats 5 into each of which a pin 6 is slidably inserted.

The casings 2, 3 laterally define apertures 8 through which pass the cutting elements 10, which are housed in the seat 5 and project from it.

The cutting element 10 connectable to a trimmer head of a garden trimmer comprises a body 11, which is pivotable to the trimmer head along a pivoting axis 23 which is parallel to the axis of rotation of the head.

The body 11 has an annular structure and presents a circular through hole 13 for receiving the trimmer locking pin 6, in such a way that the pivoting axis of the cutting element 10 is parallel to the axis of rotation of the head.

From the body 11 extends one or more flexible arms 12.

An end portion 22 of each arm 12 opposite to the body 11 has a cross-section which is compressed along the direction of the pivoting axis 23; in other words the maximal length of the cross-section in the direction of the axis 23 is shorter than the length of the cross-section in a direction perpendicular to the axis 23.

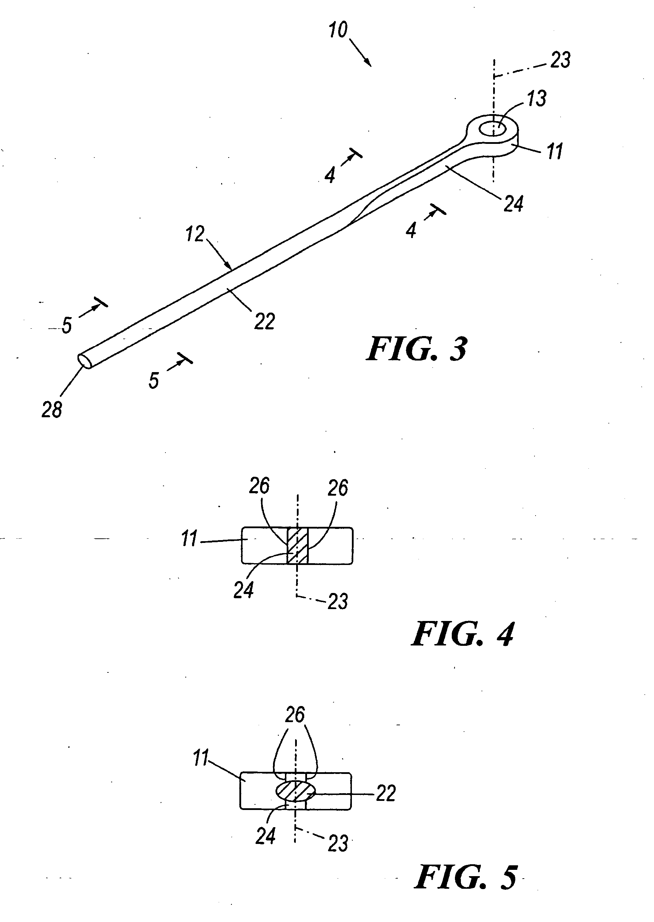

As shown in the drawings (figure 5), the cross-section through said end portion 22 is ovoidal or ellipsoidal.

Moreover, an intermediate portion 24 of each arm 12 interposed between the end portion 22 and the body 11 has a cross-section which is compressed along a direction perpendicular to the pivoting axis 23.

Preferably the intermediate portion 24 has a cross-section with walls 26 parallel to the pivoting axis 23 and plane in shape.

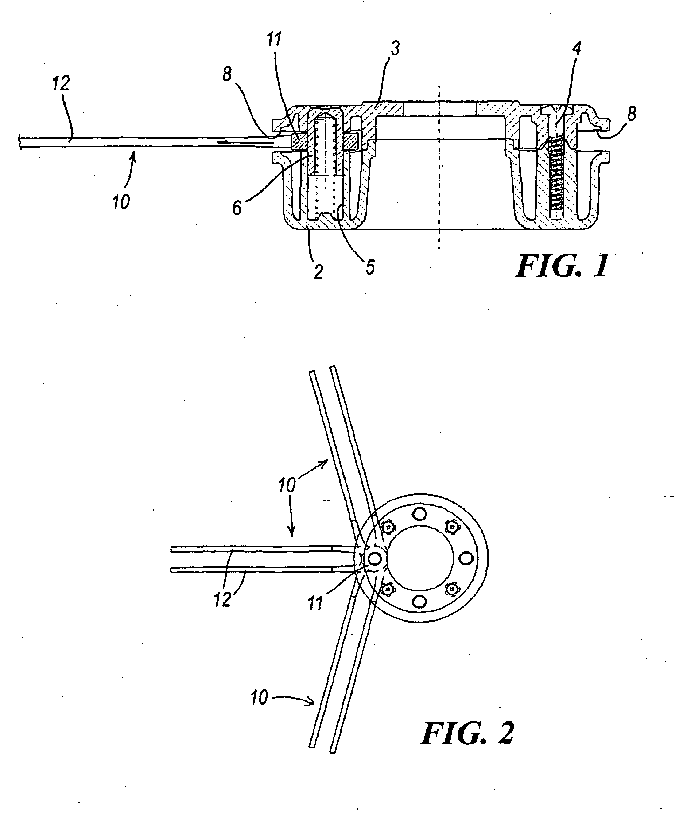

In particular said intermediate portion 24 has cross-section quadrangular in shape and preferably rectangular in shape (figure 2) with longer sides parallel to the axis 23. The cross section through the intermediate portion 24 may also be ovoidal or ellipsoidal in shape, with longer dimension parallel to the pivoting axis 23.

Thus the cutting element according to the invention has the end portion 22 with a cross-section fitted for reducing the noise which they generate during rotation and cutting the vegetation very precisely, and the intermediate portion 24 fitted for resisting the stress.

The cross-section through the arms 12 may narrows or widens in a direction perpendicular to the pivoting axis 23 from the body 11 towards a free end 28 of the end portion 22.

In addition, the cross-section through the arms 12 may also narrow along the direction of the pivoting axis from the body towards a free end of the end portion.

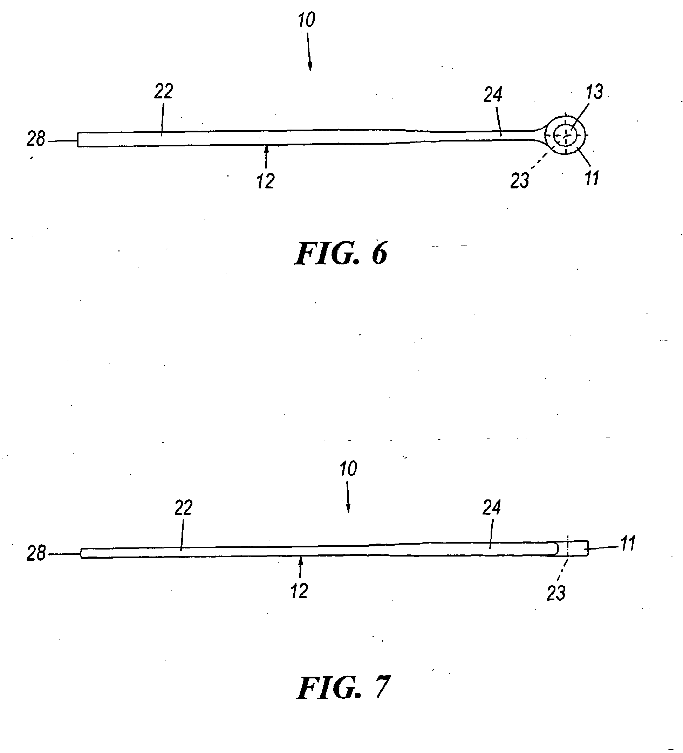

In particular (figure 6), the cross-section through the arms 12 widens because the arms (during operation, i.e. during cutting) wear starting from the free end 22; i.e. by making the end portion 22 wider, the arms have a longer working life.

Preferably the body 10 and the arms 12 are formed in one single piece and are made of a plastic material such a nylon; in addition the arms 12 present elastic characteristics.

The body 11 presents a through hole 13 into which a relative pin can be inserted for pivoting the head to the trimmer.

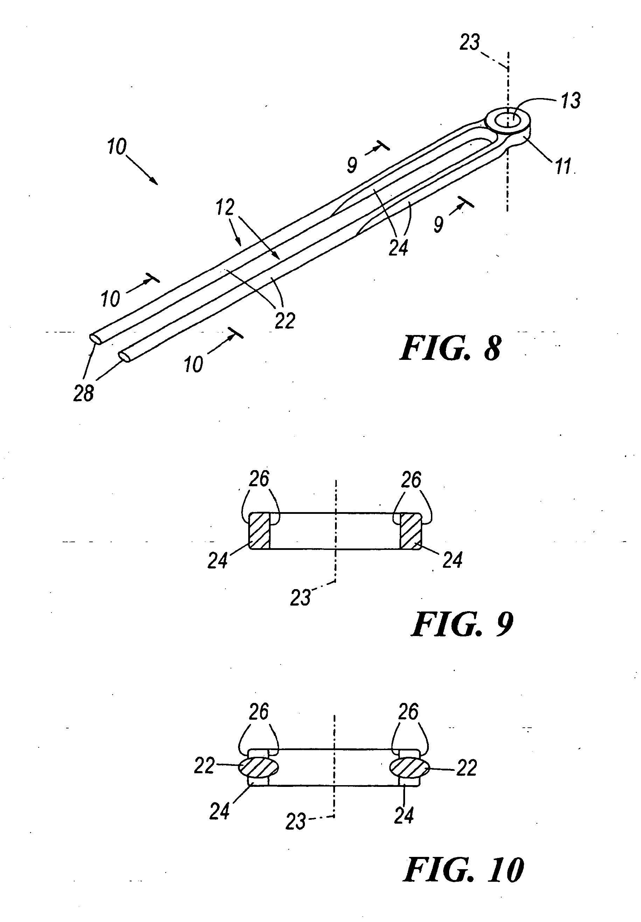

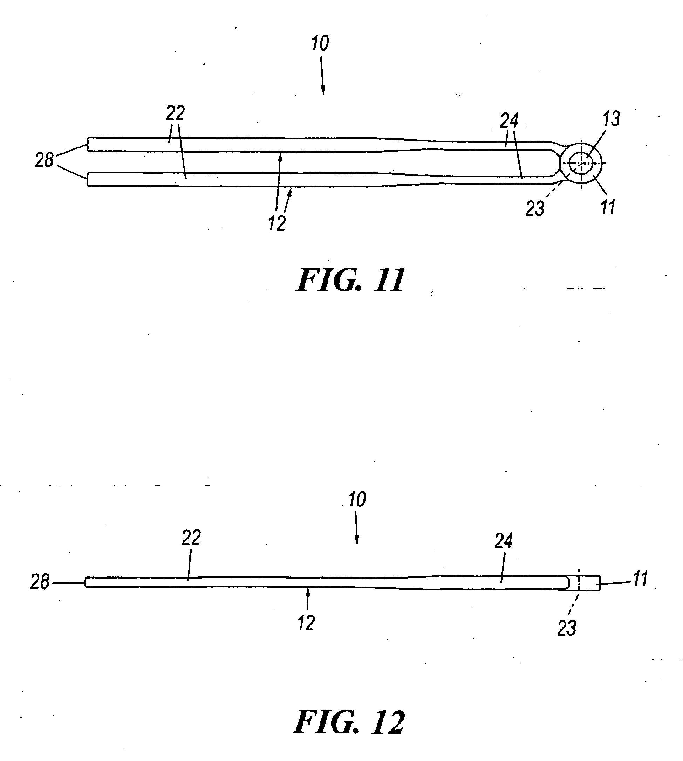

In different embodiments (see figures 8-12) the cutting element 10 of the invention comprises at least two arms (in further embodiments four or a different number) which are rectilinear and parallel to each other, or curved.

Preferably, the arms are disposed in a plane perpendicular to the pivoting axis.

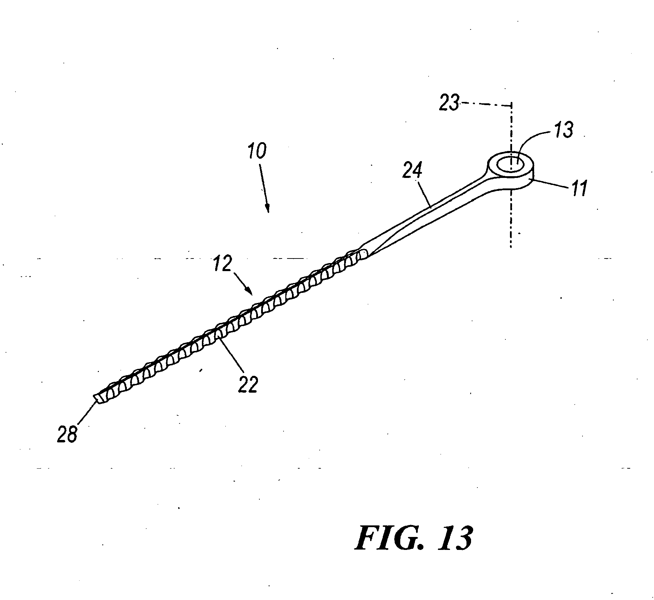

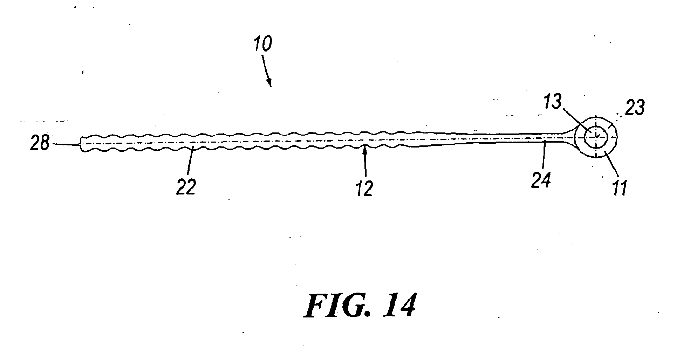

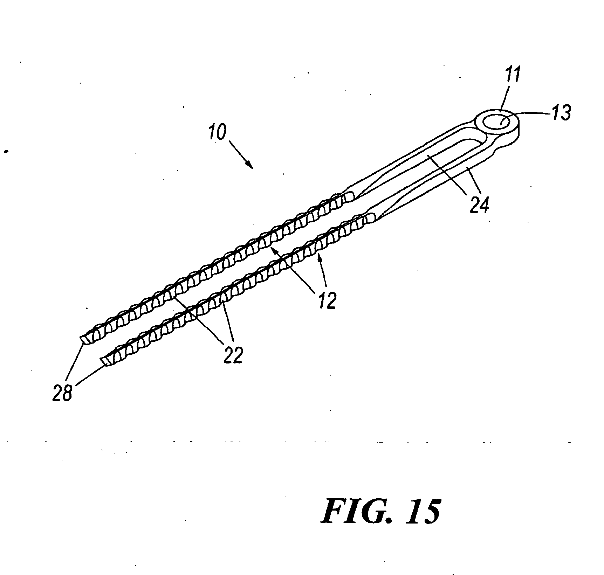

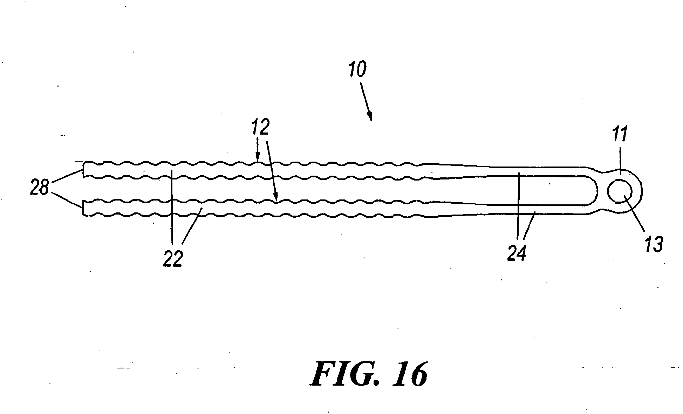

Figures 13-14 show a further embodiment of a cutting element 10 with the end portion 22 which is jagged and figures 15 - 16 show an embodiment of a cutting element 10 with two arms having their end portions 22 which are jagged.

The operation of the cutting element of the invention is apparent from that described and illustrated and is substantially the following.

The cutting element is inserted onto the pin 6 so that when the trimmer head rotate about its axis the grass and the like are cut by the cutting element.

Advantageously, during operation the fact that the particular section through the elongate elements or arms of the cutting element is compressed in the direction of the axis of the pin 6 means that the cutting element produces less noise than cutting elements of the known art.

Moreover, during rotation the cutting element is pivoted on the pin 6 and can slip relative thereto (while rotating, figure 2). This limits the forces within the elongate elements or arms of the cutting element, hence limiting their breakage close to the head when they encounter rigid obstacles.

By virtue of the particular structure and the particular connection system, the cutting element of the invention can be in the form of elongate elements which are very thin in the direction of the pin 6. In addition to reducing the noise which they generate during rotation, this also enables the vegetation to be very precisely cut (in terms of quality).

In practice the materials used and their dimensions can be chosen at will in accordance with requirements and the state of the art.

## Claims

1. A cutting element (10) connectable to a trimmer head of a garden trimmer, said cutting element (10) comprising a body (11) which is pivotable to the trimmer head along a pivoting axis (23) parallel to the axis of rotation of the head, from said body (11) extending one or more flexible arms (12), wherein an end portion (22) of each arm (12) opposite to the body (11) has a cross-section which is compressed along the direction of the pivoting axis (23), an intermediate portion (24) of each arm (12) interposed between said end portion (22) and said body (11) having cross-section plane walls (26) parallel to said pivoting axis (23), **characterised in that**
said intermediate portion (24) is compressed along a direction perpendicular to the pivoting axis (23).
compressed along a direction perpendicular to the pivoting axis (23).

2. A cutting element (10) as claimed in one or more of the preceding claims, wherein said cross-section through said intermediate portion (24) is quadrangular in shape and preferably rectangular in shape.

3. A cutting element (10) as claimed in one or more of the preceding claims, wherein the cross-section through said end portion (22) is ovoidal or ellipsoidal.

4. A cutting element (10) as claimed in one or more of the preceding claims, wherein the cross-section through the arms (12) narrows in a direction perpendicular to the pivoting axis (23) from the body (11) towards a free end (28) of the end portion (22).

5. A cutting element (10) as claimed in one or more of the preceding claims, wherein the cross-section through the arms (12) narrows along the direction of the pivoting axis (23) from the body (11) towards a free end (28) of the end portion (22).

6. A cutting element (10) as claimed in one or more of the preceding claims, wherein the cross-section through the arms (12) widens in a direction perpendicular to the pivoting axis (23) from the body (11) towards a free end (28) of the end portion (22).

7. A cutting element (10) as claimed in one or more of the preceding claims, wherein the body (11) and said arms (12) are formed in one piece and are made of a plastic material such as nylon.

8. A cutting element (10) as claimed in one or more of the preceding claims, wherein each arm (12) presents elastic characteristics.

9. A cutting element (10) as claimed in one or more of the preceding claims, wherein said body (11) presents a through hole (13) into which a relative pin (6) can be inserted for pivoting the head to the trimmer.

10. A cutting element (10) as claimed in one or more of the preceding claims, further comprising a plurality of arms (12) which are rectilinear and parallel to each other, or curved.

11. A cutting element (10) as claimed in one or more of the preceding claims, wherein the arms (12) of the cutting elements (10) are two in number, disposed in a plane perpendicular to the pivoting axis.

12. A cutting element (10) as claimed in one or more of the preceding claims, wherein the end portion (22) of each arm (12) is jagged.

## Patentansprüche

1. Schneidelement (10), welches mit einem Trimmerkopf eines Gartentrimmers verbindbar ist, wobei das Schneidelement (10) einen Körper (11) umfasst, welcher zu dem Trimmerkopf entlang einer Schwenkachse (23) parallel zu der Drehachse des Kopfes schwenkbar ist, wobei sich von dem Körper (11) ein oder mehrere flexible Arme (12) erstrecken, wobei ein Endabschnitt (22) jedes Armes (12), welcher dem Körper (11) gegenüberliegt, einen Querschnitt aufweist, welcher entlang der Richtung der Schwenkachse (23) zusammengedrückt wird, wobei ein Zwischenabschnitt (24) jedes Armes (12) zwischen dem Endabschnitt (22) und dem Körper (11) angeordnet ist und im Querschnitt ebene Wände (26) aufweist, welche parallel zu der Schwenkachse (23) liegen,
**dadurch gekennzeichnet,**
**dass** der Zwischenabschnitt (24) entlang einer Richtung senkrecht zu der Schwenkachse (23) zusammengedrückt wird.

2. Schneidelement (10) nach einem oder mehreren der vorhergehenden Ansprüche, **dadurch gekennzeichnet, dass** der Querschnitt durch den Zwischenabschnitt (24) eine tetragonale Form und vorzugsweise eine rechteckige Form aufweist.

3. Schneidelement (10) nach einem oder mehreren der vorhergehenden Ansprüche, **dadurch gekennzeichnet, dass** der Querschnitt durch den Endabschnitt (22) eiförmig oder ellipsenförmig ist.

4. Schneidelement (10) nach einem oder mehreren der vorhergehenden Ansprüche, **dadurch gekennzeichnet, dass** sich der Querschnitt durch die Arme (12) in eine Richtung senkrecht zu der Schwenkachse (23) von dem Körper (11) zu einem freien Ende (28) des Endabschnitts (22) verkleinert.

5. Schneidelement (10) nach einem oder mehreren der vorhergehenden Ansprüche, **dadurch gekennzeichnet, dass** sich der Querschnitt durch die Arme (12) entlang der Richtung der Schwenkachse (23) von dem Körper (11) zu einem freien Ende (28) des Endabschnitts (22) verkleinert.

6. Schneidelement (10) nach einem oder mehreren der vorhergehenden Ansprüche, **dadurch gekennzeichnet, dass** sich der Querschnitt durch die Arme (12) in eine Richtung senkrecht zu der Schwenkachse (23) von dem Körper (11) zu einem freien Ende (28) des Endabschnitts (23) vergrößert.

7. Schneidelement nach einem oder mehreren der vorhergehenden Ansprüche, **dadurch gekennzeichnet, dass** der Körper (11) und die Arme (12) in einem Stück ausgebildet und aus einem Kunststoffmaterial, wie beispielsweise Nylon, hergestellt sind.

8. Schneidelement nach einem oder mehreren der vorhergehenden Ansprüche, **dadurch gekennzeichnet, dass** jeder Arm (12) elastische Eigenschaften aufweist.

9. Schneidelement (10) nach einem oder mehreren der vorhergehenden Ansprüche, **dadurch gekennzeichnet, dass** der Körper ein Durchgangsloch (13) aufweist, in welches ein entsprechender Stift (6) eingeführt werden kann, um den Kopf zu dem Trimmer zu schwenken.

10. Schneidelement (10) nach einem oder mehreren der vorhergehenden Ansprüche, **dadurch gekennzeichnet, dass** das Schneidelement darüber hinaus mehrere Arme (12) umfasst, welche geradlinig und parallel zueinander oder gebogen sind.

11. Schneidelement (10) nach einem oder mehreren der vorhergehenden Ansprüche, **dadurch gekennzeichnet, dass** zwei Arme (12) der Schneidelemente (10) in einer Ebene senkrecht zu der Schwenkachse vorhanden sind.

12. Schneidelement (10) nach einem oder mehreren der vorhergehenden Ansprüche, **dadurch gekennzeichnet, dass** der Endabschnitt (22) jedes Armes (12) ausgezackt ist.

## Revendications

1. Elément de coupe (10) pouvant être raccordé à une tête de taille-haie d'un taille-haie de jardin, ledit élément de coupe (10) comprenant un corps (11) qui peut pivoter par rapport à la tête de taille-haie le long d'un axe de pivotement (23) parallèle à l'axe de rotation de la tête, à partir dudit corps (11) qui étend un ou plusieurs bras flexibles (12), dans lequel une partie d'extrémité (22) de chaque bras (12) opposé au corps (11) a une section transversale qui est comprimée le long de la direction de l'axe de pivotement (23), une partie intermédiaire (24) de chaque bras (12) intercalée entre ladite partie d'extrémité (22) et ledit corps (11) ayant des parois planes (26) en coupe parallèles audit axe de pivotement (23),
**caractérisé en ce que** ladite partie intermédiaire (24) est comprimée le long d'une direction perpendiculaire à l'axe de pivotement (23).

2. Elément de coupe (10) selon une ou plusieurs des revendications précédentes, dans lequel ladite section transversale passant par ladite partie intermédiaire (24) a une forme quadrangulaire et de préférence une forme rectangulaire.

3. Elément de coupe (10) selon une ou plusieurs des revendications précédentes, dans lequel la section transversale passant par ladite partie d'extrémité (22) est ovoïde ou elliptique.

4. Elément de coupe (10) selon une ou plusieurs des revendications précédentes, dans lequel la section transversale à travers les bras (12) se rétrécit dans une direction perpendiculaire à l'axe de pivotement (23) à partir du corps (11) vers une extrémité libre (28) de la partie d'extrémité (22).

5. Elément de coupe (10) selon une ou plusieurs des revendications précédentes, dans lequel la section transversale passant par les bras (12) se rétrécit le long de la direction de l'axe de pivotement (23) à partir du corps (11) vers une extrémité libre (28) de la partie d'extrémité (22).

6. Elément de coupe (10) selon une ou plusieurs des revendications précédentes, dans lequel la section transversale passant par les bras (12) s'élargit dans une direction perpendiculaire à l'axe de pivotement (23) à partir du corps (11) vers une extrémité libre (28) de la partie d'extrémité (22).

7. Elément de coupe (10) selon une ou plusieurs des revendications précédentes, dans lequel le corps (11) et lesdits bras (12) sont formés d'un seul tenant et sont réalisés à partir d'une matière plastique, telle que le nylon.

8. Elément de coupe (10) selon une ou plusieurs des revendications précédentes, dans lequel chaque bras (12) présente des caractéristiques élastiques.

9. Elément de coupe (10) selon une ou plusieurs des revendications précédentes, dans lequel ledit corps (11) présente un trou de passage (13) dans lequel une broche (6) relative peut être insérée pour faire pivoter la tête sur le taille-haie.

10. Elément de coupe (10) selon une ou plusieurs des revendications précédentes, comprenant en outre une pluralité de bras (12) qui sont rectilignes et parallèles entre eux ou incurvés.

11. Elément de coupe (10) selon une ou plusieurs des revendications précédentes, dans lequel les bras (12) des éléments de coupe (10) sont au nombre de deux, disposés dans un plan perpendiculaire à l'axe de pivotement.

12. Elément de coupe (10) selon une ou plusieurs des revendications précédentes, dans lequel la partie d'extrémité (22) de chaque bras (12) est dentelée.
